# EUROPEAN PATENT APPLICATION

(11) **EP 3 064 393 A1**
(43) Date of publication of application: **07.09.2016**
(21) Application number: 15157437.3
(22) Date of filing: 03.03.2015
(51) Int. Cl.: B60L 11/18

(54) **SYSTEM AND METHOD FOR CHARGING A PLURALITY OF ELECTRIC VEHICLES**

(71) Applicant: ABB Technology AG, 8050 Zürich (CH)
(72) Inventor: Bouman, Crijn, 2593 XD Den Haag (NL); Kaptein, Johannes, Gerardus, 2497 XA Den Haag (NL)
(74) Representative: Patentwerk B.V.

(57) **Abstract**

The present invention relates to a charge system for charging a plurality of electric vehicles, each provided with a charge-connector , comprising at least one contra-connector, for connecting to the charge-connector of one of the vehicles; a power source electrically coupled to the contra-connector for providing a charging power to the contra-connector; a displacement apparatus, for displacing the contra-connector between a free position in a vicinity of one of the vehicles to a position wherein it is connected to the charge-connector of said vehicle; characterized in that the displacement apparatus is further configured for displacing the contra connector in its free position from the vicinity of the charge connector of one of the vehicles to the vicinity of a charge-connector of another vehicle.

## Description

The present invention relates to a system and method for charging a plurality of electric vehicles. In particular, the invention relates to a system for charging multiple vehicles, parked at the same location simultaneously, and being charged sequentially.

Systems and methods for charging vehicles are known as such. The German Patent publication DE102013201491 for instance discloses a charger with an automatic connection system. The charger uses a camera to ensure the alignment, between a charge connector of the vehicle (in particular a bus) and a contra-connector of the charger.

However, the charger shown in DE102013201491 has the disadvantage that it doesn't provide means to charge multiple busses parked in a row. A straightforward solution would be to provide a plurality of chargers at the same location, in order to charge the vehicles simultaneously, but in case of a bus hangar or depot, there is no space for arranging multiple chargers.

It is therefor a goal of the present invention to provide a system and method for charging a plurality of electric vehicles that lack the above disadvantages.

The invention thereto proposes a charge system for charging a plurality of electric vehicles, each provided with a charge-connector, comprising at least one contra-connector, for connecting to the charge-connector of one of the vehicles; a power source electrically coupled to the contra-connector for providing a charging power to the contra-connector; a displacement apparatus, for displacing the contra-connector between a free position in a vicinity of one of the vehicles to a position wherein it is connected to the charge-connector of said vehicle; wherein the displacement apparatus is further configured for displacing the contra connector in its free position from the vicinity of the charge connector of one of the vehicles to the vicinity of a charge-connector of another vehicle.

The difference between the state of the art, as disclosed in DE102013201491 is that the displacement apparatus is further configured for displacing the contra connector in its free position from the vicinity of the charge connector of one of the vehicles to the vicinity of a charge-connector of another vehicle. Hereby, it is possible to charge multiple vehicles sequentially, without the need to install multiple chargers or contra-connectors, and without the need to move the vehicles, which would be a cumbersome requirement for a bus hangar or depot, which is generally unmanned at times when charging takes place, which will most of the time be overnight.

A bus charging system for a bus garage is thus provided, allowing to charge a large amount of electric buses, parked in rows and columns during the night in a bus garage, where there is no space left for placing chargers between the busses.

In an embodiment of the invention, wherein the charge connectors of the vehicles are on top of the vehicles, the displacement between the free position and the connected position comprises an essentially vertical movement, and the displacement between one vehicle and another vehicle comprises an essentially horizontal movement.

This allows for charging multiple vehicles that are arranged in a matrix-like configuration. The vehicles can remain at the same position, while the contra connector is moved from one vehicle to another. Such configuration is especially suitable for charging busses or like vehicles overnight.

In order to further automate the system, it may comprise an automatic connection system, that goes down when there is alignment between the charge-connector and the contra-connector. Since the displacement apparatus has freedom in the horizontal direction, it can react the location of a plurality of vehicles.

Preferably, the automatic connection system comprises a detector for detecting alignment between the charge-connector and the contra-connector. Such alignment detector may be embodied by a camera.

In yet another embodiment, the power source comprises AC/DC converters and/or a power converters that are arranged remotely from the contra connector. This has the advantage that the amount of weight to be displaced can be kept relatively low.

The displacement apparatus may for instance comprise a bar or bridge, for supporting the contra-connector and moving it from one vehicle to another vehicle, which bar or bridge is arranged above the level of the charge connectors of the vehicles. The bar or bridge may comprise a track or guidance for supporting the contra-connector.

For enabling vehicles in a matrix-like arrangement, the displacement in the horizontal plane is on two perpendicular directions, so it can reach vehicles in multiple rows throughout a plane. When the number of vehicles to be charged is very large, two contra-connectors may be present, each for charging at least one row or column of vehicles, arranged in a matrix-like parking structure for the vehicles. In such case, the displacement apparatus comprises multiple bars or bridges, each for supporting at least one of the contra-connectors and moving it from one vehicle to another vehicle.

Besides the system described above, the invention also provides a method for charging a vehicle in a system according to any of the preceding claims, comprising the steps of displacing the contra-connector between a free position in a vicinity of one of the vehicles to a position wherein it is connected to the charge-connector of the vehicle, connecting the contra-connector to the charge-connector of the vehicle, providing a charging power to the contra-connector characterized in that when the vehicle is charged, the contra connector is displaced in its free position from the vicinity of the charge connector of one of the vehicles to the vicinity of a charge-connector of another vehicle.

The invention will now be elucidated into more detail with reference to the following figures.

Herein:
- Figure 1 shows a schematic side view of a charge system according to the present invention;
- Figure 2 shows a schematic top view of a charge system according to the present invention; and
- Figure 3 shows a schematic representation of a charger cabinet for use in a system according to the present invention.

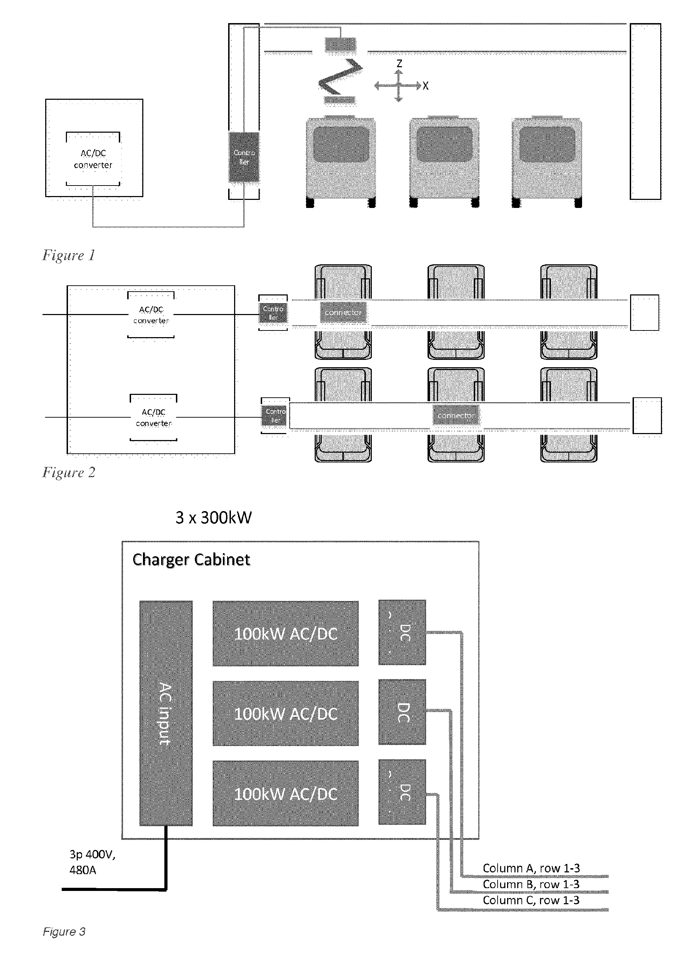

Figure 1 shows a schematic side view of a charge system 10 according to the present invention, comprising at least one contra-connector 1, for connecting to the charge-connector 2, 3, 4 of one of the vehicles 5, 6, 7. The system further comprises a power source electrically coupled 9 to the contra-connector 1 for providing a charging power to the contra-connector 1 and a displacement apparatus 11, for displacing the contra-connector between a free position A (as depicted) in a vicinity of one of the vehicles to a position B wherein it is connected to the charge-connector of said vehicle, wherein the displacement apparatus 11 is further configured for displacing the contra-connector 1 in its free position A from the vicinity of the charge connector 2 of one of the vehicles 5 to the vicinity of a charge-connector3, 4 of another vehicle 5, 6.

The charge connectors 2, 3, 4 of the vehicles are on top of the vehicles 5, 6, 7, wherein the displacement between the free position A and the connected position B comprises an essentially vertical movement in the direction indicated with Z, and wherein the displacement between one vehicle and another vehicle comprises an essentially horizontal movement, in the direction indicated with X. The power source comprises an AC/DC converter 8 arranged remotely from the contra-connector in a cabinet 13.

The displacement apparatus comprises a bar 12, for supporting the contra-connector 11 and moving it from one vehicle to another vehicle, which bar 12 is arranged above the level of the charge connectors of the vehicles 5, 6, 7.

Figure 2 shows a schematic top view of a charge system 10' according to the present invention, wherein the displacement in the horizontal plane is on two perpendicular directions, indicated with X and Y. The system 10' comprises two contra-connectors 11, 11', each for charging one row of vehicles (5, 6, 7 or 15, 16, 17 respectively), arranged in a matrix. The displacement apparatus comprises multiple bars 11, 11', each for supporting at least one of the contra-connectors and moving it from one vehicle to another vehicle.

Figure 3 shows a schematic representation of a charger cabinet 14 for use in a system according to the present invention. The cabinet comprises multiple AC/DC converters 8, 8', 8".

The above given examples are exemplary only and do not limit the scope of protection of the present invention, as defined in the following claims.

## Claims

1. Charge system for charging a plurality of electric vehicles, each provided with a charge-connector, comprising:
- At least one contra-connector, for connecting to the charge-connector of one of the vehicles;
- A power source electrically coupled to the contra-connector for providing a charging power to the contra-connector;
- A displacement apparatus, for displacing the contra-connector between a free position in a vicinity of one of the vehicles to a position wherein it is connected to the charge-connector of said vehicle;
**characterized in that**
- the displacement apparatus is further configured for displacing the contra connector in its free position from the vicinity of the charge connector of one of the vehicles to the vicinity of a charge-connector of another vehicle.

2. System according to claim 1, wherein the charge connectors of the vehicles are on top of the vehicles, wherein the displacement between the free position and the connected position comprises an essentially vertical movement, and wherein the displacement between one vehicle and another vehicle comprises an essentially horizontal movement.

3. System according to claim 1 or 2, comprising an automatic connection system, goes down when there is alignment between the charge-connector and the contra-connector.

4. System according to claim 3, wherein the automatic connection system comprises a detector for detecting alignment between the charge-connector and the contra-connector.

5. System according to any of the preceding claims, the power source comprises AC/DC converters and/or a power converters which are arranged remotely from the contra-connector.

6. System according to any of the preceding claims, wherein the displacement apparatus comprises a bar or bridge, for supporting the contra-connector and moving it from one vehicle to another vehicle.

7. System according claim 6, wherein the bar or bridge is arranged above the level of the charge connectors of the vehicles.

8. System according to any of the preceding claims, wherein the displacement in the horizontal plane is on two perpendicular directions.

9. System according to any of the preceding claims, comprising at least two contra-connectors, each for charging one row or column of vehicles, arranged in a matrix.

10. System according to claim 9, wherein the displacement apparatus comprises multiple bars or bridges, each for supporting at least one of the contra-connectors and moving it from one vehicle to another vehicle.

11. Method for charging a vehicle in a system according to any of the preceding claims, comprising the steps of:
- displacing the contra-connector between a free position in a vicinity of one of the vehicles to a position wherein it is connected to the charge-connector of the vehicle;
- Connecting the contra-connector to the charge-connector of the vehicle;
- Providing a charging power to the contra-connector;
**characterized by**
- when the vehicle is charged, displacing the contra connector in its free position from the vicinity of the charge connector of one of the vehicles to the vicinity of a charge-connector of another vehicle.
